(19) Europäisches Patentamt

European Patent Office

Office européen des brevets

(11) EP 1 341 310 B1

(12) EUROPEAN PATENT SPECIFICATION

(45) Date of publication and mention
of the grant of the patent:
31.05.2006 Bulletin 2006/22

(51) Int Cl.:
*H03M 1/10* (2006.01)

(21) Application number: 02251377.4

(22) Date of filing: 27.02.2002

(54) **Apparatus and method for encoding of information and apparatus and method for decoding of encoded information**

Vorrichtung und Verfahren zur Kodierung von Information und Vorrichtung und Verfahren zur Dekodierung von Kodierten Information

Appareil et méthode pour coder des informations et appareil et méthode pour décoder des informations codées

(84) Designated Contracting States:
AT BE CH CY DE DK ES FI FR GB GR IE IT LI LU MC NL PT SE TR

(43) Date of publication of application:
03.09.2003 Bulletin 2003/36

(73) Proprietor: Sonyx, Inc
Ashton, MD 20861 (US)

(72) Inventors:
• Scheirer, Erik K.
Ashton, MD 20861 (US)
• O'Neil, Donald A.
San Jose, CA 95132 (US)

(74) Representative: Flint, Adam
Beck Greener
Fulwood House,
12 Fulwood Place,
London WC1V 6HR (GB)

(56) References cited:
US-A- 5 790 784       US-A- 5 878 388
US-A- 6 021 165       US-B1- 6 252 908

**Description**

The present invention relates to apparatus and a method of encoding of information, and to apparatus and a method of decoding of encoded information. In preferred embodiments, the present invention relates to a method and apparatus for spectrally encoding information to facilitate its rapid transmission and/or compression.

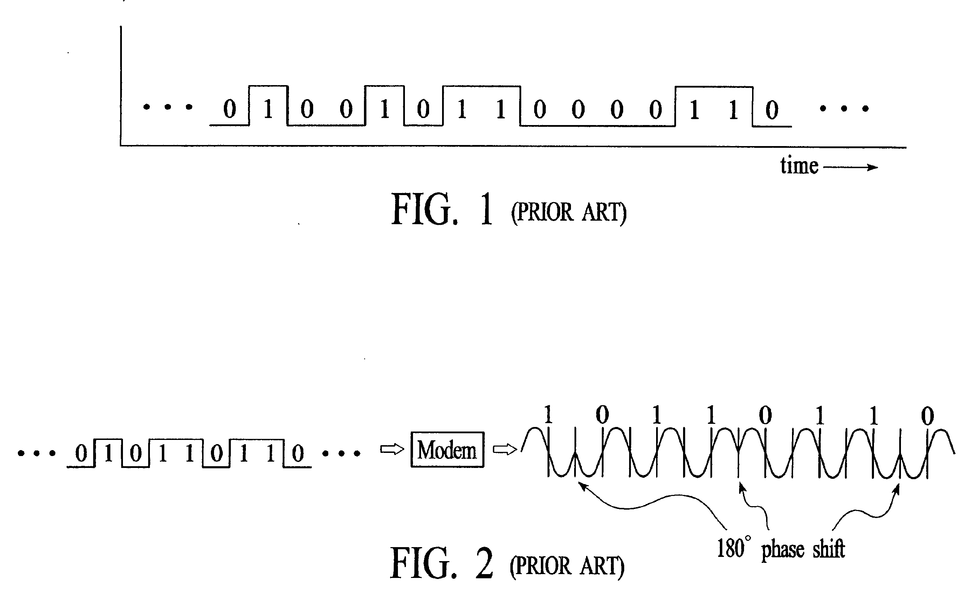

Conventional methods for encoding data for transmission and compression continually strive for higher throughput rates. In transmission schemes, for example, digital data is typically converted into a binary baseband signal wherein the data to be transmitted can be viewed as a stream of 0's and 1's, as shown in Fig. 1. Different modulation schemes are then designed to cause an analogue carrier signal to carry as much of the binary baseband signal within the shortest number of cycles of the carrier signal possible.

Computer modems, for example, employ modulation techniques such as Phase Shift Keying and Quadrature Amplitude Modulation. Where a tribit PSK coding is employed (for example, that recommended by CCITT Rec. V.27), three bits at a time are used to phase shift the transmitted signal by up to eight phases, permitting up to three times the bandwidth of the telephone carrier to be transmitted, and achieving 9600 bits/sec throughput. Fig. 2 illustrates PSK modulation in a conventional computer modem; however, for convenience of illustration, only a dual phase technique (unibit coding) is shown.

As the ability of computers to process information continues to advance, however, so does the need for higher data transmission rates. Full-motion video, hypertext, and sound wave synthesis capabilities are becoming commonplace in even standard-grade computer systems, and these applications require huge quantities of data at high throughput rates. Consequently, transmission of these amounts of data at useful speeds is becoming a serious bottleneck to the development and proliferation of this technology.

Transmission of data across telephone lines is limited most notably by the narrow bandwidth available with telephone equipment. The useful range is generally limited to between 300Hz and 3000Hz, yielding a bandwidth of less than 3kHz. Conventional 9600 baud modems using PSK techniques on binary baseband signals use virtually all of this usable bandwidth, constraining the ability to improve data throughput.

It should be noted that other means for transmitting digital data also generally rely on a binary baseband signal and thus suffer from the same bandwidth constraints, albeit to different degrees, as telephone transmissions. The transmission of data over a telephone system is given merely as one example where the conventional technology suffers from the problems described above. Other areas where similar constraints apply include local and wide area networks, satellite communications, mass storage devices, radio and cellular communications, digital audio and video recordings, and so on. Moreover, it should be noted that generally, transmission costs increase linearly with the increased bandwidth required.

Meanwhile, conventional compression schemes strive for higher compression ratios while maintaining acceptable error rates. Lossless compression techniques, for example the PKZIP compression technology and lossless JPEG, can reduce the space needed for compressed data by only about 50%. For greater compression, one must use a lossy compression technique. Most video compression technologies, such as MPEG, use a lossy technique. MPEG achieves higher compression rates by storing only the changes from one frame to another using the discrete cosine transformation (DCT) technique. Although mostly imperceptible to the human eye, MPEG does remove data from the original video. The newest standard, MPEG-2, can compress a 2 hour video into a few gigabytes. Although only modest computing power is required to decompress a MPEG-2 data stream, encoding video in the MPEG-2 format requires substantial processing power.

US-A-6021165 shows an example of a digital broadcast receiver for receiving a PSK-OFDM signal. The oscillation frequency of a local oscillator in the digital broadcast receiver is tuned by a process including receiving and demodulating a phase-reference symbol in the PSK-OFDM broadcast signal.

According to a first aspect of the present invention, there is provided apparatus for encoding information represented by a plurality of data items in a reference signal complex, the reference signal complex having n spectral components, each having a respective frequency, characterised by the apparatus comprising: means for sampling a time domain representation of the reference signal complex at a rate of at least twice the highest one of the frequencies of the n spectral components so as to obtain 2n samples of the reference signal complex covering at least one complete cycle of one of the n components having the lowest one of the frequencies; means for performing a 2n-point FFT with the obtained samples to produce a discrete frequency domain representation of the reference signal complex; means for mapping the data items to the discrete frequency domain representation of the reference signal complex to produce an adjusted complex sequence in which said data items modulate said spectral components; and, means for performing a 2n-point inverse FFT on the adjusted complex sequence to produce a discrete time domain representation of an encoded signal complex, said encoded signal complex being different from said reference signal complex but having the same spectral components.

According to a second aspect of the present invention, there is provided a method for encoding information represented by a plurality of data items in a reference signal complex, the reference signal complex having n spectral components, each having a respective frequency, characterised by the method comprising: sampling a time domain representation of the reference signal complex at a rate of at least twice the highest one of the frequencies of the n spectral components so as to obtain 2n samples of the reference signal complex covering at least one complete cycle of one of the n components having the lowest one of the frequencies; performing a 2n-point FFT with the obtained samples to produce a discrete frequency domain representation of the reference signal complex; mapping the data items to the discrete frequency domain representation of the reference signal complex to produce an adjusted complex sequence in which said data items modulate said spectral components; and, performing a 2n-point inverse FFT on the adjusted complex sequence to produce a discrete time domain representation of an encoded signal complex , said encoded signal complex being different from said reference signal complex but having the same spectral components.

According to a third aspect of the present invention, there is provided in combination, apparatus for encoding information according to claim 1 and apparatus for decoding information that has been encoded by said encoding apparatus, the decoding apparatus comprising: means for sampling the encoded signal complex at a rate equal to the rate at which the time domain representation of the reference signal complex was sampled during encoding; means for performing a 2n-point FFT with the obtained samples to produce a discrete frequency domain representation of the encoded signal complex; and, means for unmapping the discrete frequency domain representation of the encoded signal complex to produce the decoded information.

In embodiments, the present invention allows encoding of data to facilitate its lossless and rapid transmission or compression that makes better use of the bandwidth and processing power available. The available bandwidth can be used more efficiently. Higher throughput rates can be obtained when implemented in a data transmission scheme. Higher lossless compression rates can be obtained when implemented in a data compression scheme.

In a preferred embodiment, a data encoding scheme of the present invention maps a set of data to a number of spectral components within a reference signal complex, each component having an amplitude, a phase and a unique frequency. From these mapped sinusoids, a representation of an encoded signal complex can be formed. From this representation, a real-time signal, either analogue or digital, can be generated. When implemented in a data transmission scheme, the system can realise much higher throughput per available bandwidth than conventional techniques such as those employing binary baseband signals. Further, when implemented in a data compression scheme, the data encoding method can yield exponentially greater compression ratios than existing compression technologies. Although the encoding technique of the present invention should not be construed as limited to the particular applications of data transmission and compression, these implementations are considered sufficiently illustrative of the concepts of the invention, as well as its superiority over conventional techniques. Those skilled in the art, however, will readily appreciate from this description that other applications in keeping with the described concepts of the disclosed data encoding technique are possible with modifications necessary for those applications.

Embodiments of the present invention will now be described by way of example with reference to the accompanying drawings, in which:

Fig. 1 illustrates a binary baseband signal commonly used in a conventional data transmission application;

Fig. 2 illustrates a conventional modem implementing phase shift keying of a binary baseband signal;

Fig. 3 illustrates an example of an encoding system in accordance with a first embodiment of the present invention;

Fig. 4 illustrates an example of a decoding system in accordance with a first embodiment of the present invention;

Figs. 5(A) to (C) show the reference and modulated spectral components of a signal complex utilised in Figs. 3 and 4;

Figs. 6(A) to (D) show the reference and modulated spectral components of Fig. 5 in the frequency domain;

Fig. 7 illustrates a data buffer in which data to be encoded is stored, and the sequences of data mapped in the system of Figs. 3 and 4;

Fig. 8 is a block diagram of an example of a device capable of providing techniques for encoding and decoding data according to a second embodiment of the present invention in a conventional computer architecture;

Fig. 9 is a block diagram of an example of a receiver card that can be adapted to implement the like component in Fig. 8;

Fig. 10 further illustrates bandpass filter and rectifier components such as those in Fig. 9;

Fig. 11 further illustrates A/D converter and buffer components such as those in Fig. 9;

Fig. 12 is a block diagram of an example of an output driver card that can be adapted to implement the like component in Fig. 8;

Fig. 13 further illustrates components in Fig. 12;

Fig. 14 illustrates an example of a system that can be used to communicate information encoded in accordance with a third embodiment of the present invention; and,

Fig. 15 illustrates an example of a system that can be used to compress information encoded in accordance with a fourth embodiment of the present invention.

Consider first a continuous time system wherein each spectral component $S_i$ within a signal complex S = Sum $(S_i)$ ($i$=1,..,n) is represented by a sinusoid. Each sinusoid $S_i$ has three relevant attributes that are identifiable at deterministic intervals of time:

(1) amplitude ($A_i$) (or other indicia of energy)
(2) phase ($\varphi_i$) and
(3) frequency ($f_i$)

such that

$$S_i = A_i \sin(2\pi f_i t + \phi_i)$$

An embodiment of the present invention encodes information in signal complex S in such a way that it is retrievable via instantaneous measurements of these three attributes of each spectral component. In particular, a reference signal complex $S^R$ having known frequencies $f_i^R$ ($i$=1,..,n), reference amplitudes $A_i^R$, and reference phase offsets $\varphi_i^R$ ($i$=1,..,n), is modulated by a set of information X using a mapping function M to produce an encoded signal complex S, that is:

$$M(X, S^R) = S$$

Accordingly, currently unused aspects of analogue signals (and digital or numerical representations thereof) can be exploited to represent discrete values, in a manner that vastly improves throughput over existing techniques.

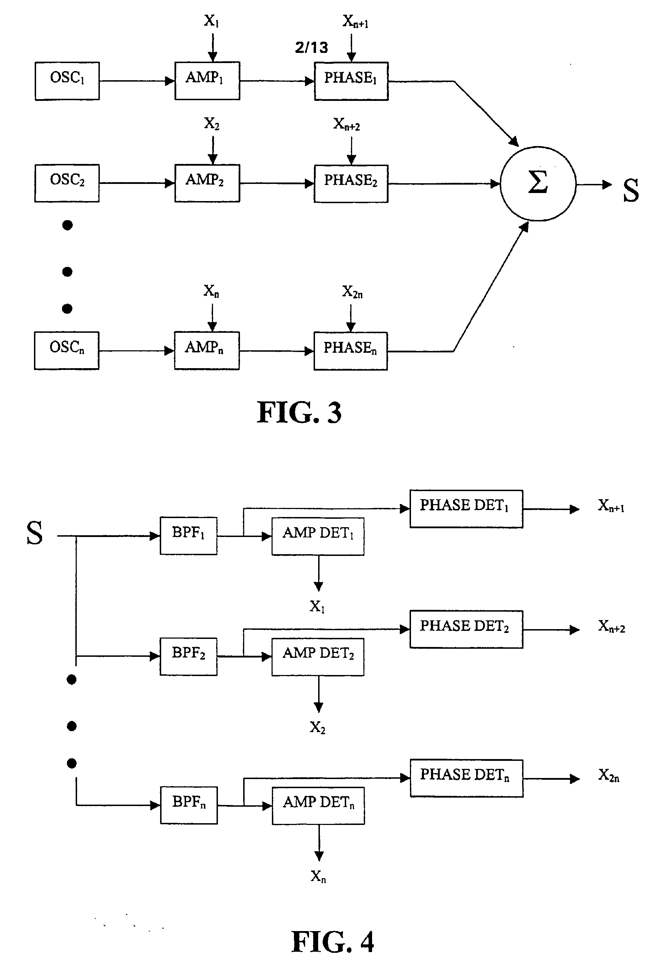

An example of an encoding scheme of the present invention will now be described in terms of a first embodiment of the present invention that is illustrated in Figs. 3 to 7.

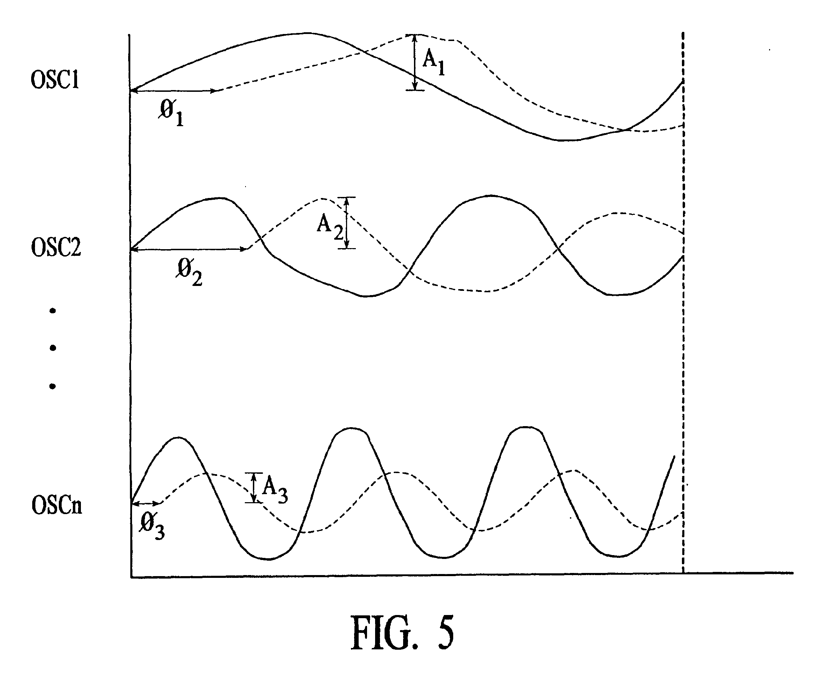

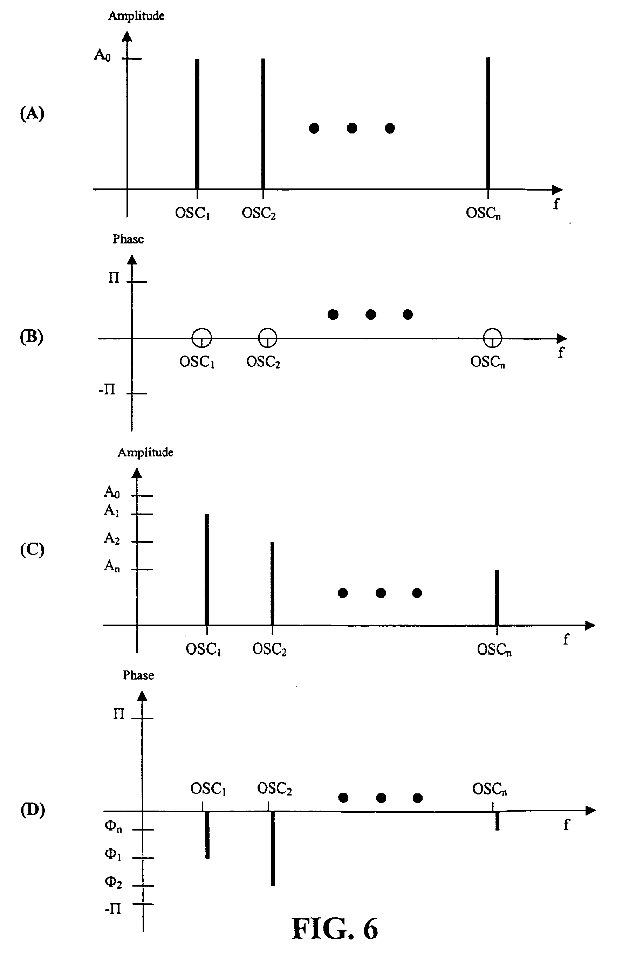

As shown in Fig. 3, a series of unique and tuned sine wave generators $OSC_1$ ... $OSC_n$ is used to create each of the spectral components of the encoded signal complex S. The sine wave generators are tuned to a common time base and amplitude range and are synchronised to generate fixed and known frequencies $f_i^R$, such as 1kHz 2kHz, 3kHz, and so on. The synchronised outputs of all of the generators having common amplitude $A_0$ (that is, $A_1^R = A_2^R = ... A_n^R = A_0$), no phase offset (that is, $\phi_1 = \phi_2^R = ... \phi_n^R = \phi_0 = 0$ (or $2\pi$ radians or multiples thereof)), and containing at least one cycle of the lowest frequency generator ($f_i^R = OSC_1$ in this example) can be seen as the reference signal complex $S^R$, as illustrated by the solid line curves in Figs. 5(A) to (C). The time period T represents the minimum period of the reference signal complex, as determined by the spectral component having the lowest frequency. Figs. 6(A) and (B) show the amplitude and phase of the reference signal complex components in the frequency domain.

Next, each of the reference sinusoids is respectively modulated in amplitude using amplifiers $AMP_1$ ... $AMP_n$ by a number $x_1$ ... $x_n$ that represents an item of data that is to be encoded. For example, if the number is 128 and the highest value that can be encoded per sinusoid is 256 (for example, 8 bits of binary data for each sinusoid), then the sinusoid is modulated by one-half the reference amplitude $A_0$ (128/256 = $\frac{1}{2}A_0$).

Next, each of the amplitude-modulated sinusoids is further respectively modulated in phase by phase-shifters $Phase_1$ ... $Phase_n$. The phase offset produced also represents an individual data item $x_{n+1}$ ... $x_{2n}$ to be encoded. For example, if the number to be encoded is 64, the phase angle is set to 64/256 or 1/4 of $\phi_0$ which is 0° (or 360°), or 90° (= $\pi/2$ radians).

The reference signal complex $S^R$ has now been modulated by the data to be encoded. The individual modulated sinusoids are then summed together to produce the encoded signal complex S, which is then ready for transmission over a carrier (e.g., a wire, a radio, optical or microwave signal, or even a sound wave).

An example of a receiving side of the system is illustrated in Fig. 4. It includes bandpass filters $BPF_1$ ... $BPF_n$ that are respectively tuned to each of the individual frequencies in the reference signal complex. Each of these filters receives the encoded signal complex S in common and extracts the individual sinusoid to which the filter is tuned.

Using analogue comparators $AmpDet_1$ ... $AmpDet_n$, the encoded amplitude data is extracted from each of the sinusoids and compared to the known reference amplitude $A_0$ to retrieve the encoded data. Next, pulse counters $PhaseDet_1$ .. $PhaseDet_n$ are used to measure the phase offset from a known beginning time reference. The detected phase offset is used to decode the encoded phase data.

The mapping function M in the above example includes the order in which each of the data items is used to modulate a certain attribute and spectral component of the reference signal complex, as well as the method used to determine how the data to be encoded is used to modulate each particular attribute. As for the latter, in the above example it has been seen that the value of the data to be encoded is scaled to a maximum value (256) to produce a factor by which attributes $A_0$ and $\varphi_0$ are multiplied. Accordingly, the maximum value is preferably greater than any possible value of x. If each value x represents an 8-bit item of data, then the maximum value associated with any item x is 255 ($2^8$ - 1).

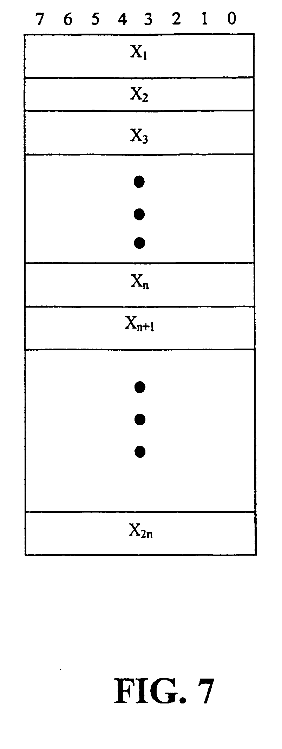

The mapping function M also includes the order in which the individual items in X are used to modulate the individual attributes $A_i$ and $\varphi_i$ of the corresponding spectral component of the signal complex having frequency $f_i$. Fig 7 illustrates the example where the set X of information to be encoded is a buffer of 8-bit words (bytes) organised sequentially. Where the number of frequencies used in the system illustrated above is n, the size of the buffer should be 2n bytes (for amplitude and phase modulation of each spectral component). Each byte $X_1$, $X_2$, $X_3$, ... $X_{2n}$ is then assigned to the amplitude and phase modulator as shown in Fig. 3. In particular, bytes $x_1$ .. $x_n$ are respectively assigned to the amplifiers $AMP_1$...$AMP_n$ of spectral components $OSC_1$...$OSC_n$, and bytes $X_{n+1}$...$X_{2n}$ are respectively assigned to phase-shifters $Phase_1$ ... $Phase_n$ of spectral components $OSC_1$...$OSC_n$. In this example, the assignment corresponds to the sequential organisation of each byte in memory; however other super-sequential or even random sequences can be used.

For true reconstruction of the encoded data, the inverse of mapping function M ($M^{-1}$) is used on the receiving side. That is, the method used to modulate each individual attribute is inverted so as to retrieve the original data to be encoded. Since the reference amplitude $A_0$ and phase offset $\phi_0$ are known, the modulated attributes are compared to these known values to retrieve the encoded data. The decoded data output from the receiving side in Fig. 4 is then used to fill a 2n-byte buffer similar to that in Fig. 7. For true reconstruction of the data, the arrangement of each byte $x_1$, $x_2$, $x_3$, ... $x_{2n}$ should be identical to the sequence used on the transmitting side (i.e. $M^{-1}$).

It should also be noted that the above system can be realised by generating and summing the sinusoids as a mathematical representation, and then placing them in the analogue domain via an analogue converter. On the receiving end, a DSP processor can be used to digitally filter and compare the data wherein a series of Goertzel frequency detectors is used.

For a continuous mapping of data, where the set of information X exceeds the amount that can be encoded in one iteration (more than 2n bytes in the above example), or is a continuous stream of data, mapping function M is repeated to produce multiple encoded signal complexes $S(\tau)$ using different portions of the information set X, that is:

$$M(X, S^R, \tau) = S(\tau)$$

where $\tau$ is the duty cycle of the mapping function. Preferably, the duration of the duty cycle is at least the period T of one cycle of the lowest frequency spectral component in the reference signal complex. The other spectral components will have shorter duty cycles of their own and will thus continue for more than one complete cycle during the mapping function's duty cycle, the excess information provided thereby being useful for error correction or detectability.

The theoretical throughput in bits per second of the above-described system depends on the resolution R (in number of bits) of the amplitude and phase modulators, the lowest frequency used $f_{min}$ and the number N of frequencies used, and can be expressed as:

$$BPS = (R_{amp} + R_{phase}) \times f_{min} \times N$$

As an example, consider a voice-band data modem implementing the above system, using 8-bit A/D converters in the modulators and 100 oscillators spaced apart by 20 Hz and having a minimum frequency of 1kHz up to 3kHz. The throughput of this system would then be:

$$BPS = (8 + 8) \times 1000 \times 100 = 1.6 \text{ megabits/sec}$$

It should be noted that handshaking techniques can be used to synchronise the receiving side to the sending side so that the proper amplitude and phase references are established. Further, a tuning process, such as adaptive equalisation, can be used to establish the bandwidth of the carrier, the resolution of individual frequency components, and any errors in frequency, amplitude, or phase over the medium.

It should be further noted that "amplitude" modulation as performed in the preferred embodiment of the present invention is radically different from conventional amplitude modulation (AM) or even pulse amplitude modulation (PAM), because the preferred embodiment is operative to map digital data values to respective components of a signal complex, which signal complex is either an analogue signal or a representation thereof (i.e., an analogue baseband signal). In contrast, conventional AM merely causes an IF band (typically sound) analogue signal to modulate a carrier analogue signal, which carrier signal has only one frequency component, and PAM causes a digital pulse train to obtain values reflected in a sampled analogue signal.

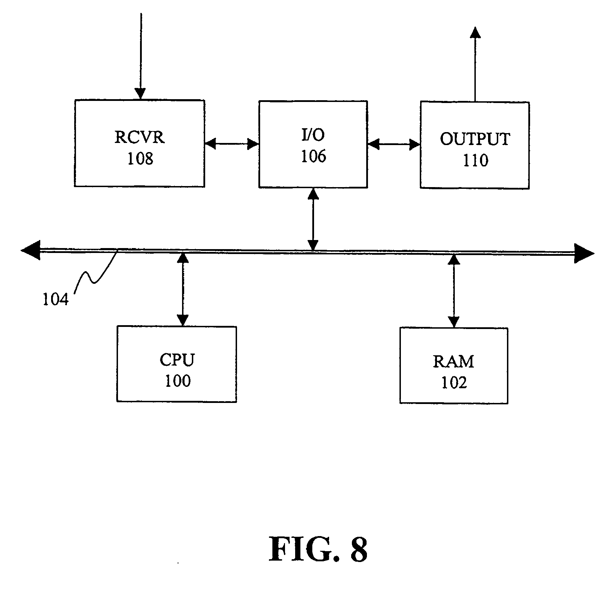

The encoding scheme of the present invention will now be described by way of example in terms of a second embodiment of the invention that is illustrated in Figs. 8 to 13.

The example shown in Fig. 8 is operable in a computer system such as a PC system having an ISA bus. It includes a CPU 100, a memory 102, and an I/O card 104, all communicating via an ISA bus 106. Receiver card 108 and output driver card 110 respectively communicate with I/O card 104.

CPU 100 can be any type of commercially available programmable microprocessor, such as a 80x86 from Intel, Corp. Memory 102 can be any type of commercially available memory, such as DRAM manufactured by Samsung Electronics, Corp. I/O card 104 provides an ISA bus data and control interface between CPU 100 and memory 102 and receiver card 108 and output driver card 110. It includes, for example, 16 8-byte decodes (read/write) and 16 16-pin IDC ribbon connectors that provide 8 bits of data, 3 bits of address, 2 bits of control, +12V and +5V power, and ground. Techniques for providing data decodes in an ISA bus architecture are well known to those skilled in the art. Software techniques, which can be executed on CPU 100, for example, for controlling the flow of data between memory 102 and I/O card 104 are also well known.

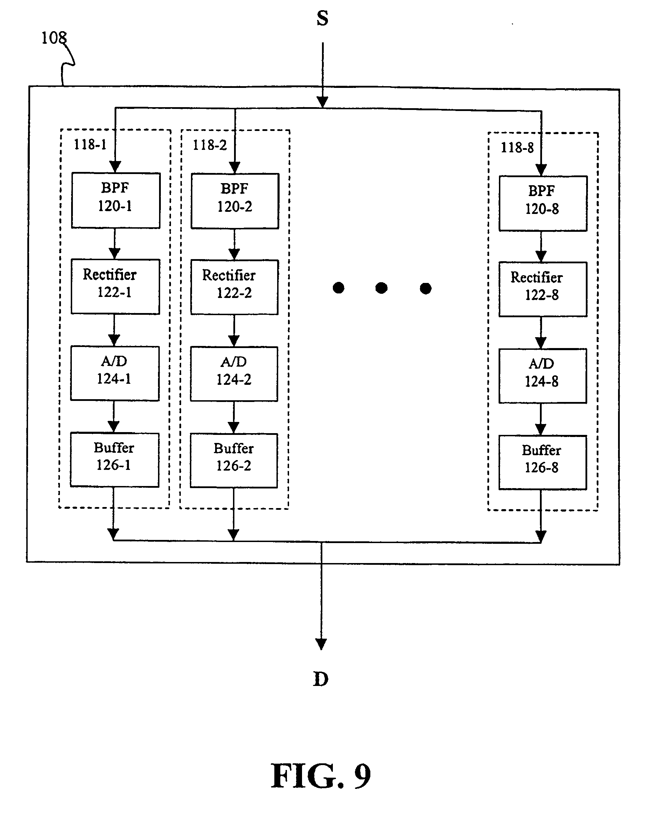

Fig. 9 further illustrates an example of a receiver card 108 such as that included in the system illustrated in Fig. 8. It includes eight banks of input decoders 118-1 ... 118-8 which commonly receive the input encoded signal complex S. It should be noted that signal complex S can be received through receiver circuitry (not shown) which can extract the complex from a carrier signal according to well known communication techniques. Alternatively, the signal complex S can be received over a tangible medium such as a telephone line or a network cable.

Each decoder 118 has a bandpass filter BPF 120 tuned to a unique frequency so as to extract a unique spectral component from encoded signal complex S and to decode the information encoded in that component's amplitude attribute. The spectral component output from BPF 120 is fed to voltage rectifier 122 which converts the analogue signal to a DC voltage, which input voltage is compared to a reference voltage and converted to a digital value indicating the fraction of the input voltage to the reference voltage by 8-bit A/D converter 124. The 8-bit data result is then latched in buffer 126.

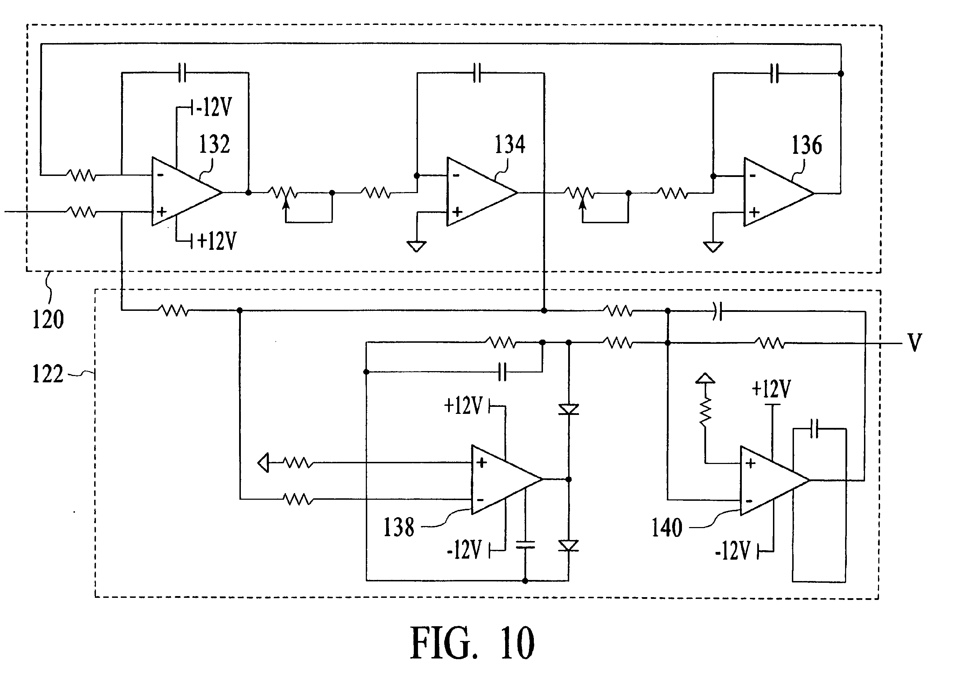

Fig. 10 further illustrates examples of a BPF 120 and voltage rectifier 122 that can be used to implement the like components in Fig. 9. As shown in Fig. 10, BPF 120 includes three operational amplifiers 132, 134, 136, each comprised by, for example, a LM348, respectively tuned by discrete components as known in the art, to filter out all unwanted spectral components of input signal complex S. The desired spectral component is fed to voltage rectifier circuit 122, which, as shown in Fig. 10, includes amplifiers 138 and 140, each comprised by, for example, a LM301A. Voltage rectifier 122 produces a DC voltage V-n corresponding to the amplitude of the desired spectral component n. In this example, the rectified voltage has a value between -12 V and +12 V.

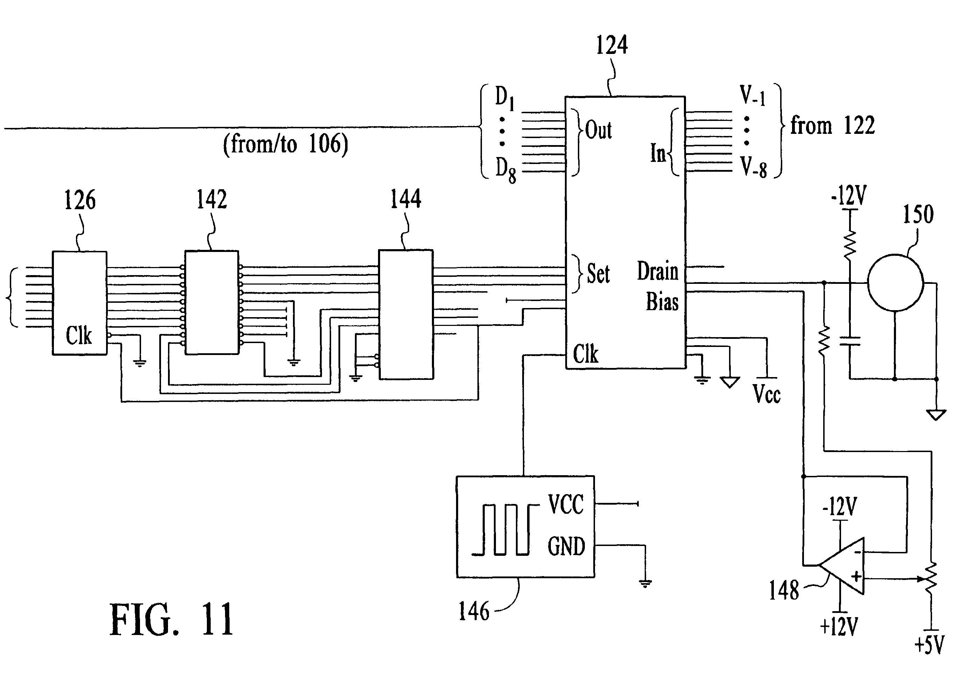

Fig. 11 further illustrates examples of an A/D converter 124 and buffer 126 that can be used to implement the like components in Fig. 9. In this example, the outputs of rectifiers 122-1 ... 122-8 are multiplexed so that they are converted and digitally stored by single A/D converter and buffer components. A/D converter 124, which can be, for example, a MAX 161 from Maxim Semiconductor, Inc., receives the rectified DC voltage outputs V-1 ... V-8 from the respective voltage rectifier and outputs an 8-bit digital value to buffer 126.

The selection of which input voltage to convert is determined by 3 bits of selection input that are received from I/O card 106 through I/O port 142 and latch 144. Latch 144 can be, for example, a 74LS244. A/D converter 124 operates in accordance with a clock signal received from clock circuit 146, which can be, for example, an Epson oscillator. The gain and bias of A/D converter 124 are respectively set by transistor 150 and amplifier 148 and their connected discrete components and voltages. Transistor 150 can be, for example, a MX 581 from Maxim Semiconductor, Inc. Amplifier 148 can be, for example, a LM 348.

The 8-bit digital output $D_1$ ... $D_8$ of A/D converter 124 is latched in buffer 126, which can be, for example, a 74LS245. The contents of buffer 126 are then output to I/O card 106 in response to a control signal received from I/O card 106 via I/O port 142 and latch 144. The timing of such control signals, as well as signals controlling the flow of data between the input encoded signal complex and through encoder circuits 118 to I/O card 106, are within the ordinary skill of those in the art.

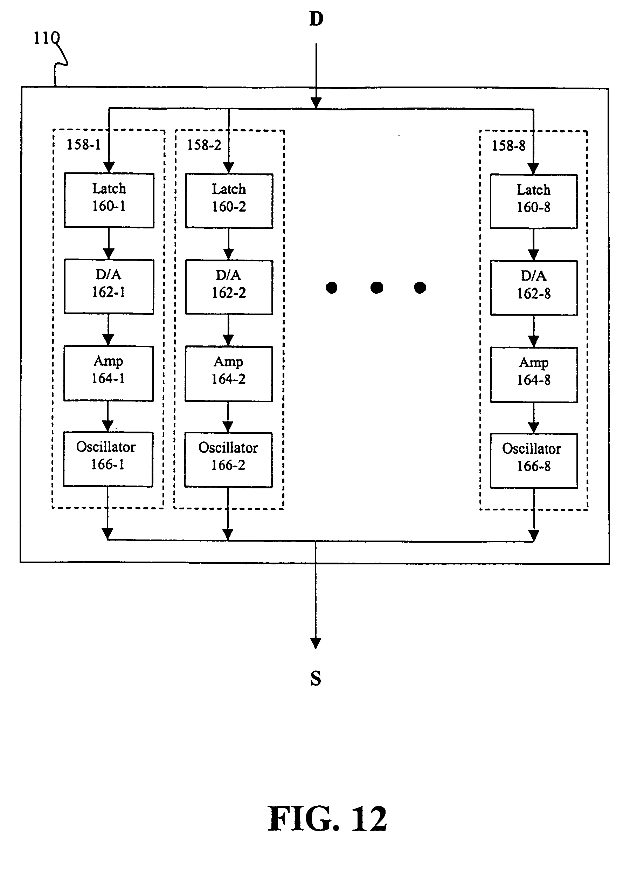

Fig. 12 further illustrates an example of an output driver card 110 such as that included in the system illustrated in Fig. 8. It includes eight banks of output encoders 158-1 ... 158-8 which commonly receive the output data D to be encoded. Each decoder 158 has an oscillator 166 tuned to generate a unique frequency so as to provide a unique spectral component of encoded signal complex S having information encoded in that component's amplitude attribute. The amplitude attribute of the spectral component output from oscillator 166 is determined by the voltage controlled amplifier 164 which causes the output from oscillator 166 to have the desired voltage within a controlled range in accordance with a received analogue output value. The analogue output value is received from 8-bit D/A converter 162, which takes an 8-bit item of information to be encoded from latch 160 and converts it to the analogue output.

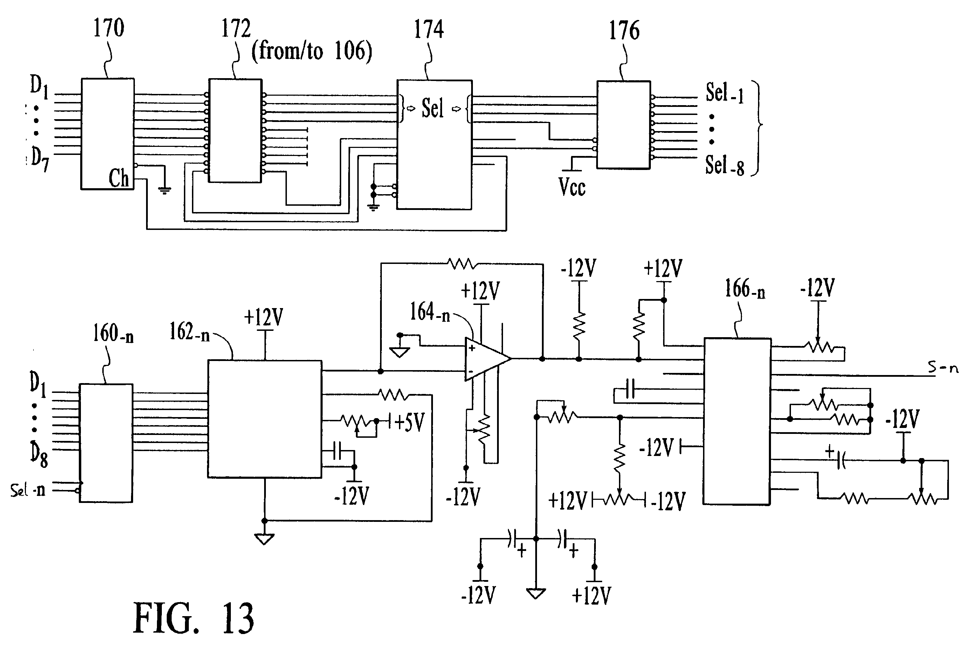

Fig. 13 further illustrates an example of an implementation of output driver card 110. As can be seen, in addition to the components described above, it includes a buffer 170, an I/O port 172, a latch 174, and a demultiplexer 176. These components are used to provide a common input path for data received from I/O card 106 to the different decoders 158-1...158-8. In particular, data to be encoded in a particular spectral component is received from I/O card 106 through I/O port 172 and stored in buffer 170, which can be, for example, a 74LS245. The particular component is selected by a 3-bit selection value that is received through I/O port 172 and latched in latch 174, which can be, for example, a 74LS244. The latched selection value is output to demultiplexer 176 (for example, a 74LS138) which toggles an individual selection line Sel-1...Sel-8 in accordance therewith. The buffered data to be encoded is output to the selected latch 160-n in response to a control signal from I/O card 106 via I/O port 172 and latch 174, which latch 160-n outputs the data in response to the toggled selection line Sel-n.

Latch 160-n can be, for example, a 74LS273. It stores the 8-bit value to be encoded and provides it on command to D/A converter 162-n, which can be, for example, a DAC0808 from Burr-Brown of Tuscon, Arizona. D/A converter 162-n produces an analogue value in response to the input 8-bit digital value, within a range determined by the attached discrete components and voltages. This analogue value is fed to amplifier 164-n, which can be, for example, a LF351 from Linear Technology. Amplifier 164-n provides a voltage control for oscillator 166-n in accordance with the received analogue value and the bias and gain ranges determined by the attached discrete components and voltages. Oscillator 166-n can be, for example, a XR-2206 from Exar Corp. It produces an analogue signal having a frequency determined by the attached discrete components and voltages and an amplitude attribute as determined by the analogue signal supplied by amplifier 164-n. The data encoded output of oscillator 166-n can be supplied to transmitter circuitry (not shown), which can include circuitry for combining the different spectral components into the complex and modulating a carrier signal according to well known communication techniques. Alternatively, the signal complex S can be transmitted over a tangible medium such as a telephone line or a network cable.

Although it has been shown above that the encoding techniques of the present invention can be implemented using well-known conventional components, efficiencies in time and design can be achieved by taking advantage of digital signal processing (DSP) techniques and tools. The application of such DSP techniques and tools to the principles of the present invention will now be described.

Recall first the discrete Fourier transform pair. In particular, given a sequence of numbers $x(p)$ ($p=0, ... P-1$), there exists a sequence of numbers $X(k)$ ($k=0, ... P-1$) such that:

$$X(k) = \text{Sum} (x(p)\, e^{\,j(2\pi kp/P)}) \; (p = 0, ..., P-1), \text{ and}$$

$$x(p) = 1/P\, \text{Sum} (X(k)\, e^{\,-j(2\pi kp/P)}) \; (k = 0, ..., P-1)$$

Next, recall the present continuous time signal complex $S = \text{Sum}(S_i)$ ($i=1,..,n$), wherein $S_i = A_i \sin(2\pi f_i t + \varphi_i)$. Assume each $f_i$ is an integer multiple of some fundamental frequency $f_0$, for example $f_1 = f_0$, $f_2 = 2f_0$, $f_3 = 3f_0$ ... $f_n = nf_0$. According to the sampling theorem, to avoid aliasing and to adequately retain all information in a signal, the signal must be sampled at twice the frequency of the highest frequency component (in this example, $2nf_0$). Meanwhile, in order to obtain a complete observation of signal complex S, it must be sampled over one complete cycle of the lowest frequency component ($f_0$ in this example). Evaluating $2n$ points of S at some sampling interval $T_s$, where $1/T_s = 2nf_0$, thus yields a periodic sequence $S(p) = \text{Sum} (A_i \sin(2\pi f_i(pT_s) + \varphi_i))$ ($i = 1,...n$) ($p = 0,... 2n-1$) for which there exists a frequency domain counterpart sequence.

It should be noted that the lowest frequency used need not be the fundamental frequency $f_0$. For example, if

the reference signal complex comprises 100 spectral components between 1000 Hz and 2000 Hz, the fundamental frequency is 10 Hz, and the lowest frequency used is 1000 Hz. In other words, the frequencies between 10 and 1000 Hz are not used, and the discrete sequence is not necessarily periodic.

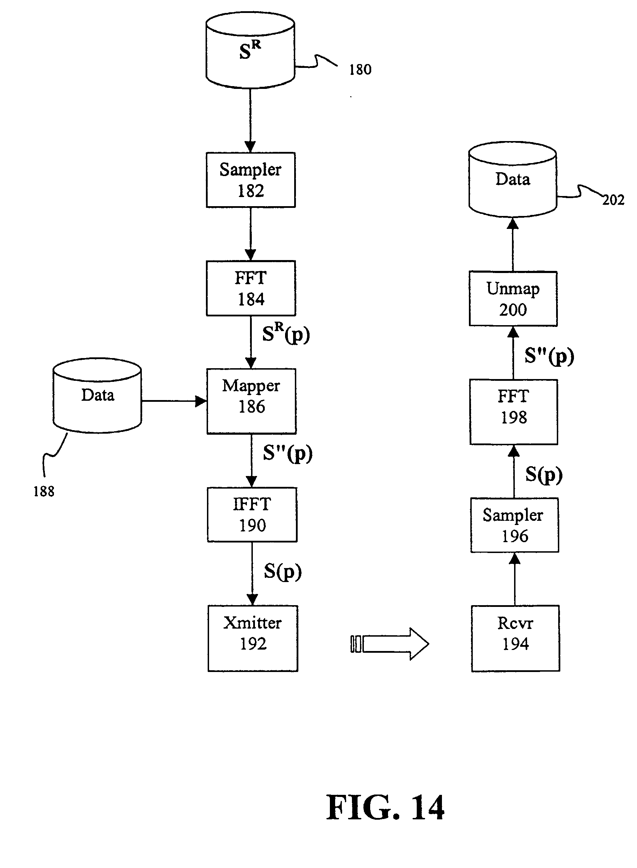

The application of the above to the principles of the invention is first illustrated by way of example in a third embodiment depicted in Fig. 14. In this embodiment, the techniques of the invention are used to implement a data communication system. As shown, the system includes a reference signal complex $S^R$ having n spectral components from $f_1$ to $f_n$, all being integer multiples of a fundamental frequency $f_0$ and all having known amplitudes $A_i$ and phase offsets $\varphi_i$. In this example, rather than being a real signal, only a mathematical representation of the reference signal complex is stored in store 180. The reference signal complex is sampled at twice the frequency of the highest frequency spectral component by sampler 182. In accordance with the principles set forth above, enough samples are obtained so that at least one complete cycle of the spectral component having the lowest frequency is covered. This should occur merely by obtaining 2n samples at the necessary sample rate, as is preferred. Because only a stored representation of the signal complex is used, this involves evaluating the representation at the required sample intervals. It should be noted, of course, that the samples may be generated and stored in an offline process instead of generating them from a stored signal complex representation.

A discrete Fourier transform on the sequence of numbers derived by sampler 182 is then performed by 2n-point FFT 184. Techniques for performing fast Fourier transforms (FFTs) are well known in the art. The result is a sequence of complex numbers $S^R(p)$ (p = 0, ..., 2n-1), which sequence is a discrete representation of the reference signal complex in the frequency domain. The amplitude and phase attributes of the reference signal complex are adjusted by mapper 186 using the stored input data in store 188. The input data can be, for example, a 2n-byte buffer X such as that illustrated in Fig. 7 (which can be seen, for example, as a 2n sequence of numbers X(p) (p=0, ... 2n-1)). Since the reference signal complex now exists as a frequency domain representation comprising a sequence of complex numbers, this is performed by mapper 186 as follows.

First, for each p = 0, ... n-1, mapper 186 adjusts the amplitude attribute of the reference signal complex as follows. Mapper 186 first calculates the ratio c for complex number $S^R(p)$, wherein:

$$c = \mathrm{sqrt}\,(X(p)\,/\,(\mathrm{Re}(S^R(p))^2 + \mathrm{Im}(S^R(p))^2))$$

where $\mathrm{Re}(S^R(p))$ is the real part and $\mathrm{Im}(S^R(p))$ is the imaginary part of the complex number $S^R(p)$.

Mapper 186 then adjusts the same complex number $S^R(p)$ for which c was calculated above to generate an adjusted complex number S"(p) as follows:

$$\mathrm{Re}(S''(p)) = c \times \mathrm{Re}(S^R(p))$$

$$\mathrm{Im}(S''(p)) = c \times \mathrm{Im}(S^R(p))$$

Next, for p = n, ... 2n-1, mapper 186 adjusts the phase attribute as follows. First, mapper 186 determines the phase angle 9 of the complex number $S^R(p)$ as:

$$\theta = \tan^{-1}(\mathrm{Im}(S^R(p))/\mathrm{Re}(S^R(p)))$$

Mapper 186 then converts the corresponding data item X(p) into a phase offset $\theta_0$ between 0 and $2\pi$ radians as follows:

$$\theta_0 = 2\pi \times (X(p)/X_{max})$$

where $X_{max}$ is the maximum possible value at a given bit resolution (255 for 8 bits in this example).

Mapper 186 then determines the new phase angle $\theta_{new}$ for the complex number $S^R(p)$ as:

$$\theta_{new} = \theta + \theta_0$$

Finally, mapper 186 adjusts the complex number $S^R(p)$ for which $\theta_{new}$ was calculated above to generate an adjusted complex number $S''(p)$ as follows:

$$Re(S''(p)) = cotan(\theta_{new}) \times sqrt(Re(S^R(p))^2 + Im(S^R(p))^2)$$

$$Im(S''(p)) = tan(\theta_{new}) \times sqrt(Re(S^R(p))^2 + Im(S^R(p))^2)$$

It should be noted that other mapping techniques can be employed by mapper 186, for example by generating the signal complex via FFT synthesis, calculating a Fourier series directly, or synthesising the complex via a discrete summation synthesis of the separate spectral components.

With the contents of the input data buffer mapped to the amplitude and phase attributes of the spectral components of $S^R$ as described above, the encoded signal complex is generated by performing an inverse 2n-point fast Fourier transform on the adjusted sequence $S''(p)$. IFFT 190 performs this task, and also scales the values by 1/2n (if necessary, depending on the type of FFT used). The result is a sequence of numbers S(p) that has a period 2n, which sequence is the discrete Fourier transform pair of the adjusted sequence $S''(p)$, which sequence is also a discrete time domain representation of the encoded signal complex S.

Transmitter 192 then transmits the encoded signal complex S. This can be done in many ways. For example, the sequence S(p) can be converted into a continuous time signal by feeding it to a D/A converter, which signal can then be transmitted directly over a medium such as a wire or sound, or used to modulate a carrier signal. Because there are many known techniques that can be used to generate a real-time signal from a sequence such as that output by IFFT 190, a detailed discussion of them is not necessary for an understanding of the present invention. Alternatively, the encoded signal complex S can be stored instead of transmitted.

The transmitted signal is received by receiver 194, and the continuous time signal S is extracted from the carrier, if necessary. Sampler 196, which can be, for example, an A/D converter, obtains the sequence S(p) by sampling the continuous time signal at the same sample rate as was used by sampler 182. The sequence S(p) is then transformed to the frequency domain by 2n-point FFT 198, yielding the adjusted sequence $S''(p)$.

The adjusted sequence is then fed to unmapper 200. It knows or can determine the discrete reference signal complex $S^R(p)$ as was determined by FFT 184. Accordingly, it determines the data X as follows.

For p = 0, ... n-1, unmapper 200 determines the data value X(p) by evaluating the amplitude attribute of the corresponding value of $S''(p)$ in comparison to the corresponding value of $S^R(p)$. Unmapper 200 extracts the data value X(p) by solving for

$$X(p) = Re(S''(p))^2 + Im(S''(p))^2$$

For p = n, ..., 2n- 1, unmapper 200 determines the data value X(p) by evaluating the phase attribute of the corresponding value of $S''(p)$ in comparison to the corresponding value of $S^R(p)$. Unmapper 200 first determines the new phase angle $\theta_{new}$ by:

$$\theta_{new} = tan^{-1}(Im(S''(p)/Re(S''(p)))$$

Unmapper 200 then determines the phase offset $\theta_0$ by subtracting $\theta$ from $\theta_{new}$ and adjusting the value to

between 0 and $2\pi$ radians. X(p) can then be determined by solving for

$$X(p) = (\theta_0 / 2\pi) \times X_{max}$$

The resulting data sequence is then used to fill a buffer in store 202.

It should be noted that certain handshaking and synchronisation procedures can be employed at both the sending and receiving sides of the connection. Ignoring the performance degradation due to such procedures, however, the theoretical throughput of the system of Fig. 14 is the same as that of the examples of the invention of Figs. 3 and 4.

It should be further noted that sampler 182, FFT 184, mapper 186, IFFT 190, sampler 186, FFT 198, and unmapper 200 can be implemented completely as software processes, or they can be implemented using dedicated DSP or other hardware components, or various combinations of each.

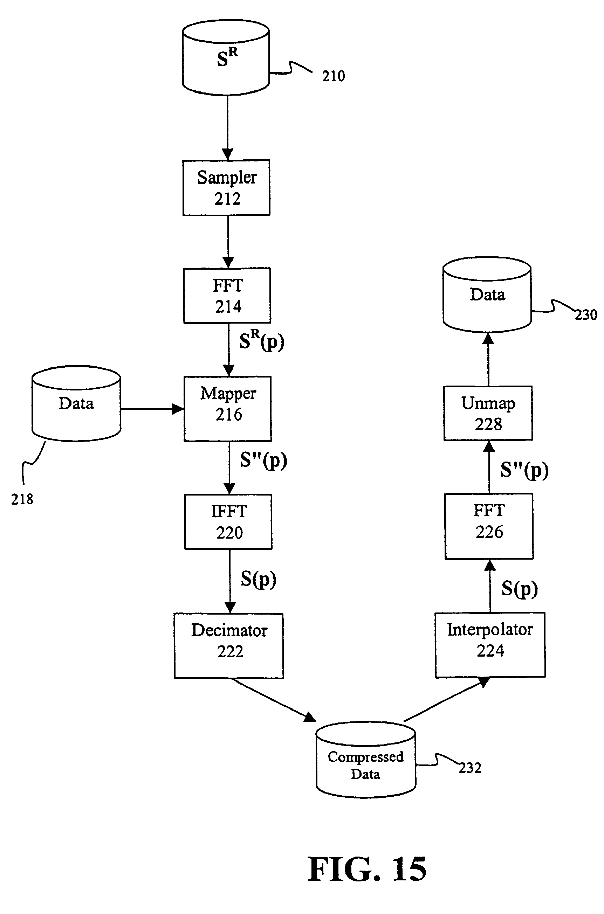

The application of the principles of the present invention to compression techniques will now be described by way of example with reference to a fourth embodiment of the invention that is depicted in Fig. 15. In this example, the reference signal complex $S^R$ is bandlimited between some spectrum $f_1 = f_{min}$ and $f_n = f_{max}$. As in the above example, each of the n spectral components is an integer multiple of some fundamental frequency $f_0$. As shown in Fig. 15, a mathematical representation thereof is stored in store 210. The reference signal complex is over-sampled at 2L times the frequency of the highest frequency spectral component $f_{max}$ by sampler 212, where L is the factor of compression desired (accordingly, if L is only one, no compression will be accomplished because that is the minimum required to satisfy the sampling theorem). As in the example above, enough samples are obtained so that one complete cycle of the spectral component having the lowest frequency $f_{min}$ is covered. Because only a stored representation of the signal complex is used, this involves evaluating the representation at the required sample intervals. It should be noted, of course, that the samples may be generated and stored in an offline process instead of generating them from a stored signal complex representation.

It should be further noted that over-sampling is done to increase the number of points and thus the frequency resolution of the discrete frequency domain representation of the reference and encoded signal complexes, although the actual resulting signals will still be bandlimited to the original spectrum. Increasing the number of points by over-sampling is a characteristic of using FFTs in this implementation. However, it should be apparent that other techniques could be used where over-sampling is not required.

The functions performed by FFT 214, mapper 216 and IFFT 220 are similar to those performed by FFT 184, mapper 186 and IFFT 190 of the example of Fig. 14, and so a repeated discussion of them will not be presented here. It should be noted, however, that the number of points used in FFT 214 and IFFT 220 will be adjusted by the factor L.

Decimator 222 decimates the resulting sequence S(p) from IFFT 220 by a factor of L. No meaningful information is lost because the sampling theorem is still satisfied. That is, since the actual spectral content of the encoded signal complex is bandlimited, decimation in time is equivalent to lowpass filtering down to the original spectral content of the reference signal complex, which was over-sampled by a factor of L. Decimator 222 can do this simply by extracting every Lth point from the sequence. The extracted decimated sequence is then stored in store 232.

When the compressed data is to be restored, interpolator 224 reads the compressed data from store 232. Interpolator 224 then interpolates the sequence by a factor of L to recreate the sequence S(p). This can be done losslessly by a Nyquist expander such as that described in "C Language Algorithms for Digital Signal Processing" by Paul Embree and Bruce Kimble, Prentice-Hall, 1991. Alternatively, interpolator can insert L-1 zeroes between each of the points in the compressed sequence, and then apply an interpolation filter to the padded sequence to obtain the original sequence S(p).

The resulting sequence S(p) is then supplied to FFT 226 and in turn to unmapper 228, whose functions are similar to those performed by FFT 198 and unmapper 200 of the example of Fig. 14. The resulting data can then be used immediately or stored in store 230.

The reference signal complex as used in the embodiments described above can be chosen in accordance with the features of the transmission medium used and the capabilities of the actual hardware components chosen. For example, a channel may have a practical available bandwidth of from 1kHz to 20kHz. Recall that the theoretical throughput of the system (neglecting magnitude and phase bit resolution) depends on the lowest frequency spectral component of the signal complex. If the signal complex contains 3,000 spectral components with the lowest component having a frequency of 1kHz, the total throughput is 3,000,000 pieces of information per second. By contrast, if the signal complex contains 2,000 spectral components with the lowest component having a frequency of 2kHz, that would yield a theoretical throughput of 4,000,000 pieces of information per second, at a 30% increase in total throughput with less frequency content. Clearly this indicates that for any application there exists an optimum realisation. This determination can be made during a tuning process performed before transmission.

Further optimisation can be achieved by dividing the usable bandwidth into several segments and using different signal complexes within each one, rather than using a single signal complex covering the entire usable bandwidth. For example, in a signal complex having a spectral component that is a harmonic of another fundamental spectral component, the harmonic's multiple oscillations in comparison to the fundamental's are wasted in that they are not modulated to carry new values.

Dividing the main spectrum into several smaller ones can take advantage of the various harmonic frequencies within the main spectrum. Of course, this increases systemic complexity in that for each sub-spectrum used, there must be a corresponding reference signal complex and timing support. Also, in such a system, a coordinated heterodyning operation must occur before the fully constructed signal is ready for output from the system.

For example, consider a signal complex having spectral components from f = 1kHz to $f_n$ = 5kHz, with n of 2000 components. The maximum throughput a single-complex approach would yield is 2,000,000 pieces of information per second. If the complex instead was divided into a "main" complex $S_1$ occupying 2.5kHz from 1.25kHz to 3.75kHz, and two other complexes $S_2$ and $S_3$ taking up the rest of the space at the ends of the bandwidth, the total data rate would yield, assuming 1,000 components in $S_1$, and 256 in $S_2$ and $S_3$: (2,500 x 1,000 = 2,500,000) + (1,000 x 256 = 256,000) + (3,750 x 256 = 1,024,000) = 3,780,000 total pieces of information per second, which is 1.89 times the systemic throughput over the single-complex approach.

As another example, the main complex can be divided into smaller ones starting with a first complex having a minimal frequency component $f_1$ and maximum frequency less than $2f_1$ so that the complex contains no harmonics. The next complex then has a minimal frequency component of $2f_1$ and a maximum frequency less than $4f_1$. This is repeated until the entire bandwidth is covered. Given the complex used above, the first complex S would occupy 1kHz up to just less than 2kHz, $S_2$ would occupy 2kHz up to just less than 4kHz and $S_3$ would take up the rest of the space at the end of the bandwidth. Accordingly, the total data rate would yield, assuming 1,000 components in $S_2$, and 512 in $S_1$ and $S_3$: (512 x 1,000 = 512,000) + (2,000 x 1000 = 2,000,000) + (4,000 x 512 = 2,048,000) = 4,560,000 total pieces of information per second, which represents a total increase of almost 2.25:1 versus the single complex approach.

It should be apparent that the principles of the present invention are not limited to the specific communication and compression concepts described above. For example, storage of digital information is typically accomplished by porting a simple serial data stream to some sort of magnetic storage medium. Rather than recording information (analogue or digital in origination, now converted to digital) as a serial data stream, the same information can be stored after first being encoded in a signal complex according to the present invention. Digital data to be stored can be mapped to a signal complex, and converted back to analogue information which is recorded on the magnetic media.

Moreover, to facilitate use in as many different communication configurations as possible, the present invention can be implemented in a transceiver chip that allows hardware devices that are not capable of performing the inventive techniques themselves to make use of the invention. As a chip, it could be plugged into whatever architecture is desired. The term "chip" can also mean a chipset that is usable the same way, but is made up of several chips, and not just one, to support the function. Or, it can be a single, integrated chip. In the general sense, the transceiver can be implemented as a software finite state machine (SFSM) implementing the inventive techniques on the hardware, or a hardware FSM to support the SFSM.

Such a technique and chip can also provide a communications backplane for any computer system, replacing or complementing existing bus technologies like ISA, EISA, PCI, SCSI, VME, and VLB. Further, by connecting the chip to a multiplexed backbone that is either a multiplexer chip, like a network hub, or a single, asynchronous channel, a system bus is made. A single transceiver can then act as a bus master or as a standard client. A transceiver can broadcast signals, or direct them to a single central receiver, depending on configuration. There can be many hubs per system, each capable of handling N number of devices for which it can direct packet traffic.

Embodiments of the present invention have been described with particular reference to the examples illustrated. However, it will be appreciated that variations and modifications may be made to the examples described within the scope of the present invention.

## Claims

1. Apparatus for encoding information represented by a plurality of data items (X(p)) in a reference signal complex ($S^R$), the reference signal complex ($S^R$) having n spectral components, each having a respective frequency, **characterised by** the apparatus comprising:

   means for sampling (182) a time domain representation of the reference signal complex ($S^R$) at a rate of at least twice the highest one of the frequencies of the n spectral components so as to obtain 2n samples of the reference signal complex ($S^R$) covering at least one complete cycle of one of the n components having the lowest one of the frequencies;
   means for performing a 2n-point FFT (184) with the obtained samples to produce a discrete frequency domain representation of the reference signal complex ($S^R(p)$);

means for mapping (186) the data items ($X(p)$) to the discrete frequency domain representation of the reference signal complex ($S^R(p)$) to produce an adjusted complex sequence ($S''(p)$) in which said data items ($X(p)$) modulate said spectral components; and,

means for performing a 2n-point inverse FFT (190) on the adjusted complex sequence ($S''(p)$) to produce a discrete time domain representation of an encoded signal complex ($S(p)$), said encoded signal complex ($S(p)$) being different from said reference signal complex ($S^R$) but having the same spectral components.

2. Apparatus according to claim 1, comprising
means for decimating the discrete time domain representation (222) to produce an extracted data sequence.

3. Apparatus according to claim 2, wherein the rate used by the means for sampling (182) is 2L times the highest one of the frequencies of the n spectral components, and the means for decimating (222) uses a decimation factor L.

4. A method for encoding information represented by a plurality of data items ($X(p)$) in a reference signal complex ($S^R$), the reference signal complex ($S^R$) having n spectral components, each having a respective frequency, **characterised by** the method comprising:

sampling a time domain representation of the reference signal complex ($S^R$) at a rate of at least twice the highest one of the frequencies of the n spectral components so as to obtain 2n samples of the reference signal complex ($S^R$) covering at least one complete cycle of one of the n components having the lowest one of the frequencies;
performing a 2n-point FFT with the obtained samples to produce a discrete frequency domain representation ($S^R(p)$) of the reference signal complex ($S^R$);
mapping the data items ($X(p)$) to the discrete frequency domain representation of the reference signal complex ($S^R(p)$) to produce an adjusted complex sequence ($S''(p)$) in which said data items ($X(p)$) modulate said spectral components; and,
performing a 2n-point inverse FFT on the adjusted complex sequence ($S''(p)$) to produce a discrete time domain representation of an encoded signal complex ($S(p)$), said encoded signal complex ($S(p)$) being different from said reference signal complex ($S^R$) but having the same spectral components.

5. A method according to claim 4, comprising decimating the discrete time domain representation to produce an extracted data sequence.

6. A method according to claim 5, wherein the rate used in the sampling is 2L times the highest one of the frequencies of the n spectral components, and the decimating step uses a decimation factor L.

7. A system comprising an apparatus for encoding information according to claim 1 and an apparatus for decoding information that has been encoded by said, encoding apparatus, the decoding apparatus comprising:

means for sampling (196) the encoded signal complex at a rate equal to the rate at which the time domain representation of the reference signal complex ($S^R$) was sampled during encoding;
means for performing a 2n-point FFT (198) with the obtained samples to produce a discrete frequency domain representation of the encoded signal complex ($S''(p)$); and,
means for unmapping (200) the discrete frequency domain representation of the encoded signal complex ($S''(p)$) to produce the decoded information.

8. A system according to claim 7, comprising:

means for decimating the discrete time domain representation (222) to produce an extracted data sequence; and
means for interpolating the extracted data sequence (224) to recreate the discrete time domain representation of the encoded signal complex ($S(p)$).

9. A system according to claim 8, wherein the rate used by the means for sampling (182) is 2L times the highest one of the frequencies of the n spectral components, and the means for decimating (222) uses a decimation factor L.

**Patentansprüche**

1. Vorrichtung zum Verschlüsseln von Informationen, die durch mehrere Datenelemente (X(p)) in einem Referenzsignalkomplex ($S^R$) dargestellt werden, wobei der Referenzsignalkomplex ($S^R$) n Spektralkomponenten aufweist, von denen jede eine zugeordnete Frequenz hat, **gekennzeichnet durch** die Vorrichtung, die umfasst:

   Mittel zum Abtasten (182) einer Zeitbereichsdarstellung des Referenzsignalkomplexes ($S^R$) mit einer Rate, die mindestens zwei mal der höchsten der Frequenzen der n Spektralkomponenten entspricht, um 2n Abtastungen des Referenzsignalkomplexes ($S^R$) zu erhalten, die zumindest einen vollständigen Zyklus einer der n Komponenten abdecken, welche die niedrigste der Frequenzen aufweist;
   Mittel zur Durchführung einer 2n-Punkt-FFT (184) mit den erhaltenen Abtastungen, um eine diskrete Frequenzbereichsdarstellung des Referenzsignalkomplexes ($S^R(p)$) zu erhalten;
   Mittel zum Mappen bzw. Abbilden (186) der Datenelemente (X(p)) auf die diskrete Frequenzbereichsdarstellung des Referenzsignalkomplexes ($S^R(p)$), um eine eingestellte Komplexsequenz (S" (p)) zu erzeugen, in der die Datenelemente (X(p)) die Spektralkomponenten modulieren; und
   Mittel zur Durchführung einer inversen 2n-Punkt-FFT (190) für die eingestellte Komplexsequenz (S''(p)), um eine diskrete Zeitbereichsdarstellung eines verschlüsselten Signalkomplexes (S(p)) zu erzeugen, wobei der verschlüsselte Signalkomplex (S(p)) sich von dem Referenzsignalkomplex ($S^R$) unterscheidet, aber die gleichen Spektralkomponenten hat.

2. Vorrichtung nach Anspruch 1, umfassend
   eine Einrichtung zum Dezimieren der diskreten Zeitbereichsdarstellung (222), um eine extrahierte Datensequenz zu erzeugen.

3. Vorrichtung nach Anspruch 2, wobei die von dem Mittel zum Abtasten (182) genutzte Rate 2L mal der höchsten der Frequenzen der n Spektralkomponenten entspricht und die Einrichtung zum Dezimieren (222) einen Dezimierungsfaktor L nutzt.

4. Verfahren zum Verschlüsseln von Informationen, die durch mehrere Datenelementen (X(p)) in einem Referenzsignalkomplex ($S^R$) dargestellt werden, wobei der Referenzsignalkomplex ($S^R$) n Spektralkomponenten aufweist, von denen jede eine zugeordnete Frequenz hat, **gekennzeichnet durch** das Verfahren, das folgende Schritte umfasst:

   Abtasten einer Zeitbereichsdarstellung des Referenzsignalkomplexes ($S^R$) mit einer Rate, die mindestens zwei mal der höchsten der Frequenzen der n Spektralkomponenten entspricht, um 2n Abtastungen des Referenzsignalkomplexes ($S^R$) zu erhalten, die mindestens einen vollständigen Zyklus einer der n Komponenten abdeckt, die die kleinste der Frequenzen hat;
   Durchführen einer 2n-Punkt-FFT mit den erhaltenen Abtastungen, um eine diskrete Frequenzbereichdarstellung ($S^R(p)$) des Referenzsignalkomplexes ($S^R$) zu erzeugen;
   Mappen bzw. Abbilden der Datenelemente (X(p)) auf die diskrete Frequenzbereichsdarstellung des Referenzsignalkomplexes ($S^R(p)$), um eine eingestellte Komplexsequenz (S"(p)) zu erzeugen, in der die Datenelemente (X(p)) die Spektralkomponenten modulieren; und
   Durchführen einer inversen 2n-Punkt-FFT für die eingestellte Komplexsequenz (S'' (p)), um eine diskrete Zeitbereichsdarstellung eines verschlüsselten Signalkomplexes (S(p)) zu erzeugen, wobei sich der verschlüsselte Signalkomplex (S(p)) von dem Referenzsignalkomplex ($S^R$) unterscheidet, aber die gleichen Spektralkomponenten hat.

5. Verfahren nach Anspruch 4, umfassend den Schritt Dezimieren der diskreten Zeitbereichsdarstellung, um eine extrahierte Datensequenz zu erzeugen.

6. Verfahren nach Anspruch 5, wobei die Rate, die bei der Abtastung verwendet wird, 2L mal der höchsten der Frequenzen der n Spektralkomponenten entspricht und der Dezimierschritt einen Dezimierungsfaktor L nutzt.

7. System, umfassend eine Vorrichtung zum Verschlüsseln von Informationen nach Anspruch 1 und eine Vorrichtung zum Entschlüsseln von Informationen, die mittels der Verschlüsselungsvorrichtung verschlüsselt wurden, wobei die Entschlüsselungsvorrichtung umfasst:

   Mittel zum Abtasten (196) des verschlüsselten Signalkomplexes mit einer Rate, die gleich der Rate ist, mit der die Zeitbereichsdarstellung des Referenzsignalkomplexes ($S^R$) beim Verschlüsseln abgetastet wurde;

Mittel zur Durchführung einer 2n-Punkt-FFT (198) mit den erhaltenen Abtastungen, um eine diskrete Frequenzbereichsdarstellung des verschlüsselten Signalkomplexes (S'' (p)) zu erzeugen; und

Mittel zum Unmappen (200) der diskreten Frequenzbereichsdarstellung des verschlüsselten Signalkomplexes (S''(p)), um die entschlüsselte Information zu erzeugen.

**8.** System nach Anspruch 7, umfassend:

Mittel zum Dezimieren der diskreten Zeitbereichsdarstellung (222), um eine extrahierte Datensequenz zu erzeugen; und

Mittel zum Interpolieren der extrahierten Datensequenz (224), um die diskrete Zeitbereichsdarstellung des verschlüsselten Signalkomplexes (S(p)) nachzubilden.

**9.** System nach Anspruch 8, wobei die Rate, die von den Abtastmitteln (182) genutzt wird, 2L mal der höchsten der Frequenzen der n Spektralkomponenten ist und die Dezimiermittel (222) einen Dezimierungsfaktor L nutzen.


## Revendications

**1.** Appareil de codage d'informations représenté par une pluralité d'éléments données (X(p)) dans un complexe de signal de référence (S$^R$), le complexe de signal de référence (S$^R$) ayant n composants spectraux, chacun ayant une fréquence respective, **caractérisé par** l'appareil comprenant :

un moyen permettant d'échantillonner (182) une représentation du domaine temporel du complexe de signal de référence (S$^R$) à une vitesse équivalant à au moins deux fois la plus élevée des fréquences des n composants spectraux de façon à obtenir 2n échantillons du complexe de signal de référence (S$^R$) couvrant au moins un cycle complet de l'un des n composants présentant la plus basse des fréquences ;
un moyen permettant d'exécuter une FFT 2n point (184) avec les échantillons obtenus pour produire une représentation discrète du domaine fréquentiel du complexe de signal de référence (S$^R$(p)) ;
un moyen permettant de mettre en correspondance (186) les éléments de données (X(p)) avec la représentation discrète du domaine fréquentiel du complexe de signal de référence (S$^R$(p)) pour produire une séquence ajustée complexe (S"(p)) dans laquelle lesdits éléments données (X(p)) modulent lesdits composants spectraux ; et,
un moyen permettant d'exécuter une FFT inverse 2n point (190) sur la séquence ajustée complexe (S " (p)) pour produire une représentation discrète du domaine temporel d'un complexe de signal codé (S(p)), ledit complexe de signal codé (S(p)) étant différent dudit complexe de signal de référence (S$^R$) mais ayant les mêmes composants spectraux.

**2.** Appareil selon la revendication 1, comprenant
un moyen permettant de décimer la représentation discrète du domaine temporel (222) pour produire une séquence de données extraites.

**3.** Appareil selon la revendication 2, dans lequel la vitesse utilisée par le moyen d'échantillonnage (182) équivaut à 2L fois la plus élevée des fréquences des n composants spectraux, et le moyen permettant de décimer (222) utilise un facteur de décimation L.

**4.** Procédé de codage d'informations représentées par une pluralité d'éléments de données (X(p)) dans un complexe de signal de référence (S$^R$), le complexe de signal de référence (S$^R$) ayant n composants spectraux, chacun ayant une fréquence respective, **caractérisé par** le procédé comprenant:

l'échantillonnage de la représentation du domaine temporel du complexe de signal de référence (S$^R$) à une vitesse équivalant à au moins deux fois la plus élevée des fréquences des n composants spectraux de façon à obtenir 2n échantillons du complexe de signal de référence (S$^R$) couvrant au moins un cycle complet de l'un des n composants présentant la plus basse des fréquences ;
l'exécution d'une FFT 2n point avec les échantillons obtenus pour produire une représentation discrète du domaine fréquentiel (S$^R$(p)) du complexe de signal de référence (S$^R$);
la mise en correspondance des éléments données (X(p)) avec la représentation discrète du domaine fréquentiel du complexe de signal de référence (S$^R$(p)) pour produire une séquence ajustée complexe (S"(p)) dans laquelle lesdits éléments de données (X(p)) modulent lesdits composants spectraux ; et,
l'exécution d'une FFT inverse 2n point sur la séquence ajustée complexe (S"(p)) pour produire une représentation discrète du domaine temporel d'un complexe de signal codé (S(p)), ledit complexe de signal codé (S(p)) étant différent dudit complexe de signal de référence (S$^R$) mais ayant les mêmes composants spectraux.

5.  Procédé selon la revendication 4, comprenant :

    la décimation de la représentation discrète du domaine temporel pour produire une séquence de données extraites.

6.  Procédé selon la revendication 5, dans lequel la vitesse utilisée dans l'échantillonnage est 2L fois la plus élevée des fréquences des n composants spectraux, et l'étape de décimation utilise un facteur de décimation L.

7.  Système comprenant un appareil de codage d'informations selon la revendication 1 et un appareil de décodage d'informations qui ont été codées par ledit appareil de codage, l'appareil de décodage comprenant :

    un moyen permettant d'échantillonner (196) le complexe de signal codé à une vitesse égale à la vitesse à laquelle la représentation du domaine temporel du complexe de signal de référence (S$^R$) était échantillonnée pendant le codage ;
    un moyen permettant d'exécuter une FFT 2n point (198) avec les échantillons obtenus pour produire une représentation discrète du domaine fréquentiel du complexe de signal codé (S"(p)) ; et,
    un moyen permettant de défaire la correspondance (200) de la représentation discrète du domaine fréquentiel du complexe de signal codé (S"(p)) pour produire l'information décodée.

8.  Système selon la revendication 7, comprenant:

    un moyen permettant de décimer la représentation discrète du domaine temporel (222) pour produire une séquence de données extraites ; et
    un moyen permettant d'interpoler la séquence de données extraites (224) pour recréer la représentation discrète du domaine temporel du complexe de signal codé (S" (p)) .

9.  Système selon la revendication 8, dans lequel la vitesse utilisée par le moyen permettant d'échantillonner (182) équivaut à 2L fois la plus élevée des fréquences des n composants spectraux, et le moyen de décimation (222) utilise un facteur de décimation L.

... 0 1 0 0 1 0 1 1 0 0 0 0 1 1 0 ...

time ——→

FIG. 1 (PRIOR ART)

EP 1 341 310 B1

... 0 1 0 1 1 0 1 1 0 ... ⇨ Modem ⇨

1 0 1 1 0 1 1 0

180° phase shift

FIG. 2 (PRIOR ART)

**FIG. 3**

**FIG. 4**

FIG. 5

OSC1 $\varnothing_1$ $A_1$

OSC2 $\varnothing_2$ $A_2$

OSCn $\varnothing_3$ $A_3$

**FIG. 6**

FIG. 7

**FIG. 8**

108

S

118-1

BPF
120-1

Rectifier
122-1

A/D
124-1

Buffer
126-1

118-2

BPF
120-2

Rectifier
122-2

A/D
124-2

Buffer
126-2

• • •

118-8

BPF
120-8

Rectifier
122-8

A/D
124-8

Buffer
126-8

D

# FIG. 9

FIG. 10

FIG. 11

EP 1 341 310 B1

**D**

110

158-1

Latch
160-1

D/A
162-1

Amp
164-1

Oscillator
166-1

158-2

Latch
160-2

D/A
162-2

Amp
164-2

Oscillator
166-2

• • •

158-8

Latch
160-8

D/A
162-8

Amp
164-8

Oscillator
166-8

**S**

# FIG. 12

FIG. 13

**FIG. 14**

**FIG. 15**